# EUROPÄISCHE PATENTSCHRIFT

(11) **EP 3 280 610 B1**
(45) Veröffentlichungstag und Bekanntmachung des Hinweises auf die Patenterteilung: **11.08.2021**
(21) Anmeldenummer: 16712937.8
(22) Anmeldetag: 01.04.2016
(51) Int. Cl.: B60N 2/02, B60N 2/06, B60N 2/07, B60N 2/08, B60N 2/12, B60N 2/20

(54) **VORRICHTUNG FÜR EINEN FAHRZEUGSITZ UND FAHRZEUGSITZ**
DEVICE FOR A VEHICLE SEAT, AND VEHICLE SEAT
DISPOSITIF POUR SIÈGE DE VÉHICULE ET SIÈGE DE VÉHICULE

(30) Priorität: 07.04.2015 DE 102015206166
(43) Veröffentlichungstag der Anmeldung: 14.02.2018
(73) Patentinhaber: Adient Luxembourg Holding S.à r.l., 1855 Luxembourg (LU)
(72) Erfinder: UTZINGER, Karl, 66919 Weselberg (DE); JOST, Hermann, 67659 Kaiserslautern (DE)
(74) Vertreter: Liedhegener, Ralf
(86) Internationale Anmeldenummer: PCT/EP2016/057210
(87) Internationale Veröffentlichungsnummer: WO 2016/162280

(56) Entgegenhaltungen:
- WO-A1-2014/055083
- DE-A1-102011 011 766
- DE-B3-102004 057 901

## Beschreibung

Die Erfindung betrifft eine Vorrichtung für einen Fahrzeugsitz mit den Merkmalen des Oberbegriffs des Anspruchs 1, sowie einen Fahrzeugsitz.

### Stand der Technik

Im Stand der Technik sind verschiedene Easy-Entry-Systeme bekannt, welche einen erleichterten Einstieg in eine zweite Sitzreihe eines Fahrzeuges ermöglichen. Das Easy-Entry-System ist durch einen Entriegelungshebel, welcher üblicherweise an einer Rückenlehne des Fahrzeugsitzes angeordnet ist, betätigbar, wodurch die Rückenlehne des Fahrzeugsitzes aus einem Einstiegsbereich schwenkt. Ist der Fahrzeugsitz auf Schienen angeordnet, kann der Fahrzeugsitz bei Betätigung des Entriegelungshebels zusätzlich oder alternativ in Fahrtrichtung aus dem Einstiegsbereich heraus verschiebbar sein.

In an sich bekannter Weise ermöglicht eine Easy-Entry-Verstellvorrichtung für einen Fahrzeugsitz eine Verstellbarkeit des Fahrzeugsitzes zwischen einer Gebrauchsposition und einer Easy-Entry-Position. Eine solche Verstellbarkeit ist insbesondere für solche Fahrzeuge besonders vorteilhaft, die lediglich eine Türe pro Fahrzeugseite haben. Beim Überführen des Fahrzeugsitzes von der Gebrauchsposition in die Easy-Entry-Position wird sowohl ein Lehnenbeschlag der Verstellvorrichtung, als auch eine Sitzlängsverriegelung der Verstellvorrichtung gelöst. Das Lösen des Lehnenbeschlags ermöglicht ein Verschwenken der Sitzlehne des Fahrzeugsitzes nach vorn in Richtung eines Sitzteils des Fahrzeugsitzes, während das Lösen der Sitzlängsverriegelung ein Vorschieben des gesamten Fahrzeugsitzes in Fahrtrichtung ermöglicht. Ein Fahrzeuginsasse erlangt somit Zugang zu den Rücksitzen des Fahrzeugs.

Aus der DE 10 2011 011 766 A1 sind ein gattungsgemäßer Längseinsteller sowie ein gattungsgemäßer Fahrzeugsitz bekannt. Der Längseinsteller umfasst zwei Schienenpaare mit jeweils zwei relativ zueinander verschiebbaren Sitzschienen, nämlich einer Oberschiene und einer Unterschiene, welche einander wechselseitig umgreifen. Die Oberschiene ist relativ zu der Unterschiene innerhalb eines Komforteinstellbereichs und darüber hinaus in eine Easy-Entry-Stellung verschiebbar.

Aus der DE 10 2004 057 901 B3 ist ein Längseinsteller für einen Fahrzeugsitz bekannt, mit frei schwenkbarer Lehne, mit einer ersten Sitzschiene, einer zweiten Sitzschiene, relativ zu welcher die erste Sitzschiene in Längsrichtung verschiebbar ist, einer Verriegelungsvorrichtung zum Verriegeln des Längseinstellers, einer der ersten Sitzschiene zugeordneten und mit der zweiten Sitzschiene zusammenwirkenden Memoryvorrichtung, welche eine eingestellte Sitzlängsposition speichert, die durch eine beim Freischwenken der Lehne vorgenommene Längsverschiebung des Fahrzeugsitzes verlassen und beim Zurückschieben wieder eingenommen wird, und einer der ersten Sitzschiene zugeordneten Ansteuervorrichtung, welche die Memoryvorrichtung zum Zurücksetzen und die Verriegelungsvorrichtung zum Entriegeln ansteuert, wobei die Ansteuervorrichtung relativ zur ersten Sitzschiene in Längsrichtung eingeschränkt beweglich angeordnet ist.

Aus der WO 2014/055083 A1 ist eine Führungsbahn-Anordnung bekannt, enthaltend eine Memory-Anordnung, die in einen Eingriffszustand versetzt werden kann, um eine von einem Benutzer gewählte Position einzustellen. Wenn sich die Memory-Anordnung in einem Eingriffszustand und an der von einem Benutzer gewählten Position befindet, setzt die Memory-Anordnung Bewegung einer ersten Schiene relativ zu einer zweiten Schiene in einer Rückwärts-Richtung Widerstand entgegen. Wenn sich die Memory-Anordnung in dem Eingriffszustand und an der von einem Benutzer gewählten Position befindet und sich die zweite Schiene relativ zu der ersten Schiene in einer Vorwärts-Richtung bewegt, wird die Memory-Anordnung in der Rückwärts-Richtung relativ zu der zweiten Schiene an eine erste Position verschoben.

### Aufgabe

Der Erfindung liegt die Aufgabe zu Grunde, eine Vorrichtung für einen Fahrzeugsitz der eingangs genannten Art zu verbessern, insbesondere eine modulare bedarfsweise Bereitstellung einer Easy-Entry-Komfort-Funktion sowie einer Easy-Entry-Offenhaltefunktion zu ermöglichen sowie einen entsprechenden Fahrzeugsitz bereitzustellen.

### Lösung

Diese Aufgabe wird erfindungsgemäß gelöst durch eine Vorrichtung für einen Fahrzeugsitz, welcher einen Sitzteil und eine Lehne aufweist, und dessen Sitzteil mit einer ersten Sitzschiene eines Längseinstellers verbunden ist. Die erste Sitzschiene des Längseinstellers ist in einer strukturfesten zweiten Sitzschiene des Längseinstellers in Längsrichtung verschiebbar geführt. Der Fahrzeugsitz ist für einen vereinfachten Zugang zu den rückwärtigen Sitzen aus der Gebrauchsstellung in eine Easy-Entry-Stellung überführbar, wenn eine Verriegelung des Längseinstellers des Fahrzeugsitzes durch ein Vorklappen der Lehne entriegelt ist. Ferner ist eine Memory-Vorrichtung vorgesehen, welche eine Verschiebung der ersten Sitzschiene relativ zur zweiten Sitzschiene erfasst. Ebenso weist die Vorrichtung ein mit der Memory-Vorrichtung in Verbindung stehendes Mehrfunktionsteil auf, welches mittels einem zusätzlichen Bauteil eingerichtet ist, eine Easy-Entry-Komfort-Funktion oder eine Easy-Entry-Offenhaltefunktion bereitzustellen.

Unter einer Easy-Entry-Funktion ist allgemein zu verstehen, dass ein Fahrzeugsitz zum erleichterten Einsteigen in eine hintere Sitzreihe aus einer Gebrauchsstellung, durch Vorklappen der Lehne sowie ein Verschieben in Längsrichtung, in eine sogenannte Easy-Entry-Stellung überführbar ist, um dem einsteigenden Fahrgast möglichst viel Platz zwischen dem Fahrzeugsitz und der hinteren Sitzreihe bereitzustellen. Zum Aktivieren der Easy-Entry-Funktion wird ein Entriegeln der Längsverstellung in an sich bekannter Weise durch entsprechendes Vorklappen der Lehne ausgelöst. Wird die Lehne beim Zurückverschieben des Fahrzeugsitzes jedoch vor Erreichen der Memory-Position wieder aufgerichtet, so verriegelt die Längsverstellung vorzeitig. Zur Verhinderung eines vorzeitigen Aufrichtens der Lehne kann beispielsweise eine Verriegelung vorgesehen sein, welche die Lehne in der vorgeklappten Stellung arretiert. Diese Verriegelung muss jedoch in bekannter Weise beim Erreichen der Memory-Position durch ein manuelles Betätigen eines Handgriffs oder Hebels von Benutzer gelöst werden, um die Lehne wieder in eine Gebrauchsstellung aufrichten zu können. Die DE 10 2008 008 935 B3, deren diesbezüglicher Offenbarungsgehalt ausdrücklich einbezogen wird, bezeichnet eine derartige Verriegelung zur Arretierung der vorgeklappten Lehne als Feststellklinke und beschreibt diese detailliert in ihrer Funktion.

Unter einer Easy-Entry-Komfort-Funktion im Sinne der Erfindung ist allgemein zu verstehen, dass, im Falle eines Längseinstellers mit Easy-Entry-Funktion und einer vorgesehenen Verriegelung zur Arretierung der vorgeklappten Lehne, beim Erreichen der Memory-Position selbstständig eine Entriegelung der Lehne ausgelöst wird. Dies erspart dem Benutzer ein erneutes manuelles Betätigen eines Handgriffs oder Hebels zum manuellen Lösen der zuvor beschriebenen Verriegelung zur Arretierung der vorgeklappten Lehne.

Unter einer als Easy-Entry-Offenhaltefunktion bezeichneten Funktion im Sinne der Erfindung ist allgemein zu verstehen, dass im Falle eines Längseinstellers mit Easy-Entry-Funktion ohne Verriegelung zur Arretierung der vorgeklappten Lehne, nach einem Verlassen der Memory-Position die Verriegelung der Längsverstellung permanent in dem geöffneten entriegelten Zustand gehalten. Selbst dann, wenn die Lehne beim Zurückverschieben des Fahrzeugsitzes, jedoch vor Erreichen der Memory-Position, wieder aufgerichtet wird, bleibt die Verriegelung der Längsverstellung geöffnet und der Fahrzeugsitz ist trotz vorzeitig aufgerichteter Lehne weiter zurück schiebbar, bis in die Memory-Position. Beim Erreichen der Memory-Position wird die Längsverstellung wieder automatisch verriegelt.

Allgemein weist der Längseinsteller zusätzlich wenigstens ein von dem Sperrelement der Memory-Vorrichtung zu unterscheidendes weiteres Verriegelungselement einer Verriegelung des Längseinstellers auf, welches dazu eingerichtet ist, die sitzfeste erste Sitzschiene in Bezug auf die strukturfeste zweite Sitzschiene zu verriegeln. Zur genaueren Unterscheidung sei darauf hingewiesen, dass das Sperrelement lediglich zur Blockierung einer Bewegung der ersten Sitzschiene relativ zur zweiten Sitzschiene beim Erreichen der gespeicherten Memory-Position eingerichtet ist, während das Verriegelungselement in an sich bekannter Weiser einer Einstellung einer Sitzlängsposition dient und zur Aufnahme von bei einem Frontalaufprall auftretenden Kräften eingerichtet ist.

Beim Erreichen der gespeicherten Memory-Position erfolgt eine Blockierung der ersten Sitzschiene in der zweiten Sitzschiene mittels des Sperrelements. Zum Betätigen des Sperrelements weist die Memory-Vorrichtung einen mit dem Getriebe wirkverbundenen und relativ zu dem Getriebe beweglichen Betätigungsarm auf. Spätestens bei Erreichen der gespeicherten Sitzlängsposition übt das Getriebe ein Steuermoment auf den Betätigungsarm aus, aufgrund dessen der Betätigungsarm das Sperrelement ansteuert. Unter "ansteuern" kann hierbei allgemein verstanden werden, dass mittels einer Bewegung des Betätigungsarmes eine Veränderung der resultierenden auf das Sperrelement wirkenden Kraft erzielt wird, in Folge dessen das Sperrelement in eine Blockierstellung bewegt wird.

Hierbei wird in vorteilhafter Weise die Anzahl an Gleichteilen in der modularen Vorrichtung erhöht und die Easy-Entry-Komfort-Funktion und eine Easy-Entry-Offenhaltefunktion mit jeweils einem optionalen, zusätzlichen Bauteil ermöglicht. Eine zeitgleiche Bereitstellung beider Funktionen ist nicht beabsichtigt, jedoch ausdrücklich auch nicht ausgeschlossen. Hierdurch ergeben sich weiter fertigungstechnische Synergieeffekte, welche weiter vorteilhaft die Wirtschaftlichkeit in der Herstellung der Vorrichtung weiter verbessert.

Vorteilhafte Ausgestaltungen, welche einzeln oder in Kombination miteinander eingesetzt werden können, sind Gegenstand der Unteransprüche.

Gemäß einer möglichen Ausgestaltung der Vorrichtung weist die Memory-Vorrichtung ein Getriebe auf, welches eine Verschiebung der ersten Sitzschiene relativ zur zweiten Sitzschiene erfasst.

Das Mehrfunktionsteil kann an den in Längsrichtung betrachteten Enden einen ersten Verbindungabschnitt und einen dem ersten Verbindungsabschnitt gegenüberliegenden zweiten Verbindungsabschnitt aufweisen.

Das zusätzliche Bauteil kann beispielsweise ein Bowdenzug sein, welcher mit einer Verriegelung zur Arretierung der vorgeklappten Lehne in Wirkverbindung steht. Der Bowdenzug kann mit dem ersten Verbindungsabschnitt des Mehrfunktionsteils verbunden sein.

Das zusätzliche Bauteil kann beispielsweise ein Blockierhebel sein, welcher eingerichtet ist, die Verriegelung des Längseinstellers im entriegelten Zustand zu sichern. Das Mehrfunktionsteil kann bevorzugt über dem zweiten Verbindungsabschnitt mit dem Blockierhebel verbundenen sein. Der Blockierhebel kann von der Bewegung des Mehrfunktionsteils in den Bewegungsradius des Betätigungshebels verschwenkbar sein. Ferner kann der Blockierhebel eine angeformte Nase aufweisen.

Die Memory-Vorrichtung kann mit einer Spindel-Mutter-Anordnung in Verbindung stehen. Die Spindel-Mutter-Anordnung kann eine Gewindespindel samt stirnseitig angeordnetem Stirnzahnrad, eine Mutter sowie ein Zahnsegment umfassen. Das Zahnsegment der Spindel-Mutter-Anordnung kann mit einer Verzahnung des Mehrfunktionsteils in Wirkverbindung stehen, um dieses anzutreiben. Ferner kann es vorgesehen sein, dass die Verzahnung in Form einer Zahnstange ausgebildet ist.

Ferner wird die Aufgabe erfindungsgemäß gelöst, durch einen Fahrzeugsitz mit wenigstens einer Vorrichtung gemäß der vorherigen Beschreibung.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Darstellung eines Fahrzeugsitzes,
- Fig. 2:: eine perspektivische Darstellung eines Schienenpaares eines Längseinstellers mit einer Memory-Vorrichtung,
- Fig. 3:: eine perspektivische Darstellung einer möglichen Ausgestaltung einer Memory-Vorrichtung,
- Fig. 4:: eine ausschnittsweise Darstellung einer Memory-Vorrichtung in einer zweiten Sitzschiene,
- Fig. 5a:: eine schematische Darstellung eines Getriebes der Memory-Vorrichtung von Fig. 4 sowie einer Spindel-Mutter-Anordnung,
- Fig. 5b:: eine schematische Darstellung des Getriebes der Memory-Vorrichtung von Fig. 5a aus einem unterschiedlichen Blickwinkel,
- Fig. 6:: eine Draufsicht auf eine Spindel-Mutter-Anordnung,
- Fig. 7:: eine Querschnittsdarstellung durch die Spindel-Mutter-Anordnung von Fig. 6 entlang der Schnittebene E-E,
- Fig. 8:: eine perspektivische Darstellung eines Teils der Spindel-Mutter-Anordnung aus Fig. 6,
- Fig. 9:: eine Ansicht einer Explosionsdarstellung der Spindel-Mutter-Anordnung aus Fig. 6 mit einem Funktionselement,
- Fig. 10a:: eine perspektivische Darstellung der zusammengesetzten Spindel-Mutter-Anordnung aus Fig. 9 in einem Zustand in der Memory-Position,
- Fig. 10b:: eine perspektivische Darstellung der Spindel-Mutter-Anordnung aus Fig. 10a in einem Zustand außerhalb der Memory-Position,
- Fig. 11:: eine perspektivische Darstellung einer Memory-Vorrichtung zur Bereitstellung einer Komfort-Funktion,
- Fig. 12a:: eine perspektivische Darstellung einer Memory-Vorrichtung zur Bereitstellung einer Offenhaltefunktion in der Memory-Position, und
- Fig. 12b:: eine perspektivische Darstellung einer Memory-Vorrichtung zur Bereitstellung einer Offenhaltefunktion außerhalb der Memory-Position.

Die Zeichnungen werden nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 3 und wie üblich in Fahrtrichtung ausgerichtet ist. Der Fahrzeugsitz 1 kann jedoch auch in abweichender Ausrichtung, beispielsweise quer zur Fahrtrichtung verbaut werden.

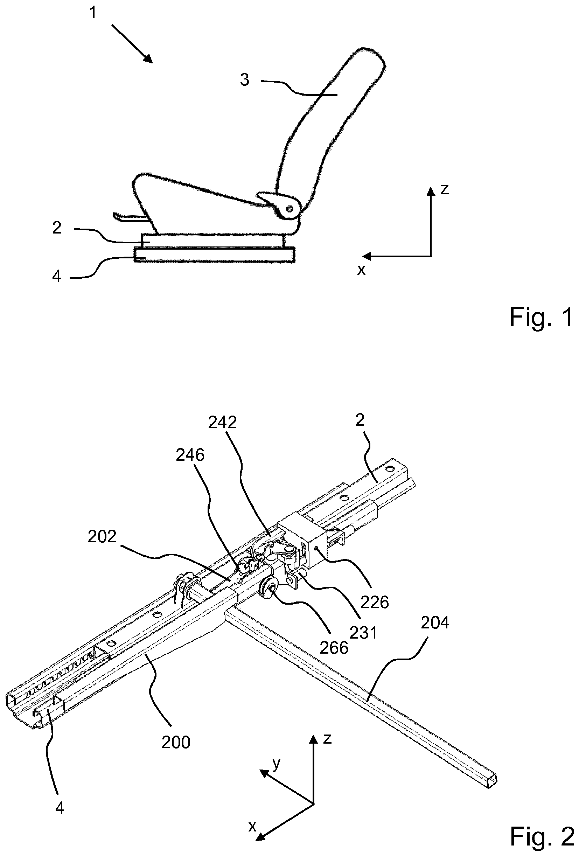

Der in Fig. 1 gezeigte Fahrzeugsitz 1 ist in einer Gebrauchsstellung mit aufgerichteter Lehne 3 auf einem Längseinsteller montiert. Der Längseinsteller weist eine erste Sitzschiene 2 und eine zweite Sitzschiene 4 auf, relativ zu welcher die erste Sitzschiene 2 in Längsrichtung verschiebbar ist. Der Fahrzeugsitz 1 ist hierbei mit der ersten Sitzschiene 2 fest verbunden. Die zweite Sitzschiene 4 ist üblicher Weise mit einem nicht dargestellten Fahrzeugboden und/oder einer Fahrzeugstruktur verbunden. Der Fahrzeugsitz 1 ist zusammen mit der sitzfesten, ersten Sitzschiene 2 relativ zu der strukturfesten, zweiten Sitzschiene 4 in Längsrichtung x verschiebbar. Vorzugsweise weist der Fahrzeugsitz 1 zwei im Wesentlichen symmetrisch zu einer Mittelebene, die senkrecht zur Querrichtung y verläuft, angeordnete Längseinsteller auf.

In Fig. 2 ist eine perspektivische Darstellung eines mittels einer ersten Sitzschiene 2 und einer zweiten Sitzschiene 4 gebildeten Schienenpaares eines Längseinstellers gezeigt. Eine von dem Längseinsteller grundsätzlich bereitgestellte Funktion zum Einstellen einer Sitzlängsposition des Fahrzeugsitzes 1 ist mittels eines Handgriffs 200, welcher wie dargestellt an einer Übertragungsstange 204 angeordnet ist, betätigbar. Ferner ist ein Betätigungshebel 202 an der Übertragungsstange 204 angeordnet, welcher dazu eingerichtet ist, auf eine Verriegelungsvorrichtung des jeweiligen Schienenpaares des Längseinstellers zu wirken, um dieses zu entriegeln und den Fahrzeugsitz 1 entsprechend in Längsrichtung x verstellen zu können. Ferner ist eine Memory-Vorrichtung vorgesehen, welche einer Easy-Entry-Funktion dient und beim Betätigen derselben eine Längsverschiebung der ersten Sitzschiene 2 relativ zur zweiten Sitzschiene 4 längenmäßig erfasst und im Falle eines wiederholten Einnehmens der Memory-Position eine weitere Längsverschiebung blockiert, insbesondere mittels eines Sperrelements 14 blockiert.

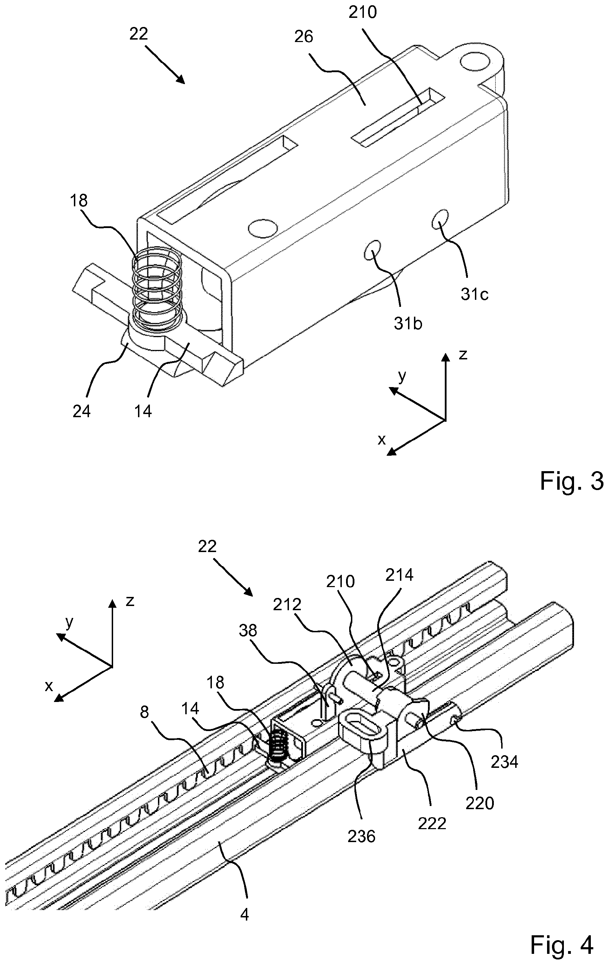

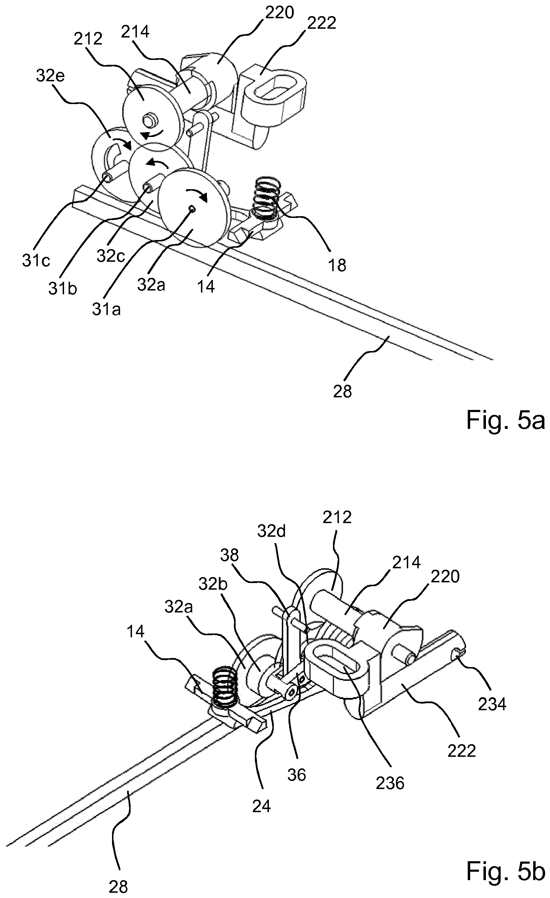

Fig. 3 zeigt eine perspektivische Darstellung einer ersten möglichen Ausgestaltung einer Memory-Vorrichtung 22 zur Betätigung von unten. Fig. 3 zeigt, dass ein Gehäuse 26 in Richtung des Sperrelements 14 offen ausgestaltet ist, so dass ein Betätigungsarm 24 von unten her an einem Sperrelement 14 angreifen und dieses in einer nach oben gerichteten Bewegung ansteuern kann. Die Betätigung von unten entspricht der Ausgestaltung einer Rückstellfeder 18 als Druckfeder, welche das Sperrelement 14 federbelastet in die Freigabestellung treibt. Das Sperrelement 14 ist durch die Betätigung mittels des Betätigungsarms 24 entgegen der Kraft der Rückstellfeder 18 in die Blockierstellung bringbar. Ferner sind in dieser Darstellung eine im Gehäuse 26 gelagerte zweite Achse 31b und dritte Achse 31c gezeigt, welche nachfolgend anhand der Figuren 5a und 5b näher beschrieben werden.

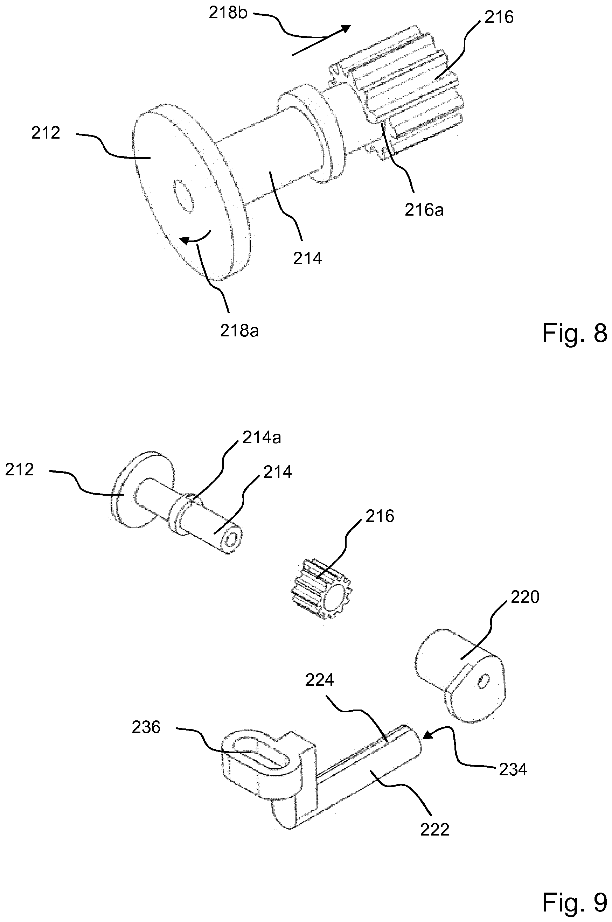

In Fig. 4 ist die Memory-Vorrichtung 22 gemäß Fig. 3 in einer zweiten Sitzschiene 4 gezeigt. Die Darstellung von Fig. 4 zeigt weiter, dass die Memory-Vorrichtung 22 mit einer Spindel-Mutter-Anordnung in Verbindung steht. Die Spindel-Mutter-Anordnung umfasst, eine Gewindespindel 214 samt stirnseitig angeordnetem Stirnzahnrad 212, eine Mutter 216 sowie ein Zahnsegment 220 (siehe Fig. 9). Die Spindel-Mutter-Anordnung ist hierbei derart angeordnet, dass ein stirnseitig an der Gewindespindel 214 angeordnetes Stirnzahnrad 212 durch die Durchtrittsöffnung 210 des Gehäuses 26 der Memory-Vorrichtung 22 hindurchgreift und mit einem innerhalb des Gehäuses 26 befindlichen Getriebe 30 in Wirkverbindung steht.

Die Figuren 5a und 5b zeigen eine schematische Darstellung eines Getriebes der Memory-Vorrichtung 22 von Fig. 4 sowie einer Spindel-Mutter-Anordnung in zwei unterschiedlichen Blickwinkeln.

Anhand der Figuren 5a und 5b wird nachfolgend der Aufbau und die allgemeine Funktionsweise einer auf einem Getriebe 30 basierenden beispielhaften Memory-Vorrichtung 22 beschrieben. Hierbei ist ein erstes Zahnrad 32a gezeigt, welches zur Erfassung einer Längsverschiebung der in der ersten Sitzschiene 2 angeordneten Memory-Vorrichtung 22 relativ zu einer zweiten Sitzschiene 4, mit einer Zahnstange 28 in Eingriff steht. Die schematisch dargestellte Zahnstange 28 ist bevorzugt in einem Bodenbereich der zweiten Sitzschiene 4 angeordnet und fest mit der zweiten Sitzschiene 4 verbunden.

Eine Rotationsbewegung des ersten Zahnrades 32a entspricht demnach der Längsverschiebung. Das erste Zahnrad 32a ist zusammen mit einem zweiten Zahnrad 32b drehfest auf einer ersten Achse 31a angeordnet. Das zweite Zahnrad 32b steht in Eingriff mit dem dritten Zahnrad 32c. In gleicher Weise ist das dritte Zahnrad 32c zusammen mit dem vierten Zahnrad 32d drehfest auf einer zweiten Achse 31b angeordnet. Das vierte Zahnrad 32d steht in Eingriff mit dem fünften Zahnrad 32e, welches auf der dritten Achse 31c gelagert ist. Die Rotationsrichtungen der Zahnräder 32a bis 32e sind in Fig. 5a entsprechend durch Pfeile angedeutet.

Die Radien des ersten Zahnrades 32a, des zweiten Zahnrades 32b, des dritten Zahnrades 32c, des vierten Zahnrades 32d und des fünften Zahnrades 32e sind derart gewählt, dass eine stufenweise Untersetzung der Rotationsbewegung des ersten Zahnrades 32a erfolgt, so dass entsprechend einer maximal möglichen Längsverschiebung das fünfte Zahnrad 32e maximal eine volle Umdrehung, bevorzugt etwas weniger als eine volle Umdrehung, ausführt. Es sind jedoch ebenso auf einem Getriebe 30 basierende Memory-Vorrichtungen 22 denkbar, deren Zahnräder 32a bis 32e derart angepasst sind, dass eine Drehung von mehr als 360° des fünften Zahnrades 32e, welches allgemein dem letzten Zahnrad entspricht, vorgesehen sind. Vorliegend weist das erste Zahnrad 32a einen größeren Radius als das zweite Zahnrad 32b auf. Das zweite Zahnrad 32b weist ferner einen kleineren Radius als das dritte Zahnrad 32c auf. Das dritte Zahnrad 32c weist einen größeren Radius als das vierte Zahnrad 32d auf. Das vierte Zahnrad 32d weist einen kleineren Radius als das fünfte Zahnrad 32e auf. Ferner dient die dritte Achse 31c zu Lagerung einer nicht dargestellten Mitnehmerscheibe sowie des Betätigungsarms 24.

Die zweite Achse 31b und die dritte Achse 31c sind - wie in Fig. 3 gezeigt - in vorgesehenen Lagerungen im Gehäuse 26 der Memory-Vorrichtung 22 gelagert. Die erste Achse 31a ist an einem Ende der Schwinge 36 gelagert, welche wiederum auf der zweiten Achse 31b gelagert ist. Auf der zweiten Achse 31b ist ferner ein mit der Schwinge 36 in Verbindung stehender Hebel angeordnet. Die Schwinge 36 ist weiter mit einer Zugstange 38 verbunden, welche dazu dient, eine Längseinstellung des Fahrzeugsitzes 1 in eine neue zu speichernde Sitzlängsposition zu ermöglichen. Dies erfolgt dadurch, dass die Zugstange 38 die Schwinge 36 um die zweite Achse 31b verschwenkt und hierbei das erste Zahnrad 32a von der Zahnstange 28 abgehoben wird. Aufgrund des verlorenen Kontakts zwischen erstem Zahnrad 32a und Zahnstange 28 kann die Memory-Vorrichtung 22 keine Längsverschiebung mehr erfassen. Dies ist erst wieder der Fall, wenn die Zugstange 38 und dementsprechend das erste Zahnrad 32a abgesenkt werden.

Ferner ist zur Bereitstellung einer sogenannten Reset-Funktion, mittels welcher das Getriebe 30 wieder in den Ausgangszustand bringbar ist, eine nicht dargestellte Reset-Feder vorgesehen. Die Reset-Feder greift hierzu beispielsweise an einem der Zahnräder 32a bis 32e, vorzugsweise an einem der Zahnräder 32a, 32c, 32e, an und dreht das Getriebe 30 sowie die mit dem Getriebe 30 verbundene Mitnehmerscheibe in die Stellung zurück, welche das Getriebe 30 und die Mitnehmerscheibe in der gespeicherten Sitzlängsposition aufweisen. Die Reset-Feder kann beispielsweise in Form einer Spiralfeder ausgestaltet sein. Die Reset-Feder stützt sich bevorzugt zwischen einem zuvor genannten Zahnrad 32a bis 32e und an einem gehäusefesten Abschnitt ab. Die Reset-Feder wird bevorzugt bei einem Verschieben der ersten Sitzschiene 2 von der Drehung des entsprechenden Zahnrades 32a bis 32e vorgespannt. Wenn anschließend das Getriebe 30 durch Anheben des ersten Zahnrades 32a mittels der Zugstange 38 außer Eingriff mit der Zahnstange 28 in den Freilauf gebracht wird, bewirkt ein Entspannen der vorgespannten Reset-Feder ein Rückstellen des Getriebes 30, anders ausgedrückt bewirkt es einen Reset des Getriebes 30. Eine Betätigung der Zugstange 28 ist bevorzugt mittels eines Reset-Hebels 242 eines nachfolgend beschriebenen Sitzlängsverstell-Mechanismus realisiert.

Wie ferner in Fig. 5a gezeigt ist, steht das stirnseitig an der Gewindespindel angeordnete Stirnzahnrad 212 mit dem dritten Zahnrad 32c des Getriebes 30 in Eingriff, so dass eine der Verschiebung der ersten Sitzschiene 2 entsprechende Rotationsbewegung abgegriffen wird.

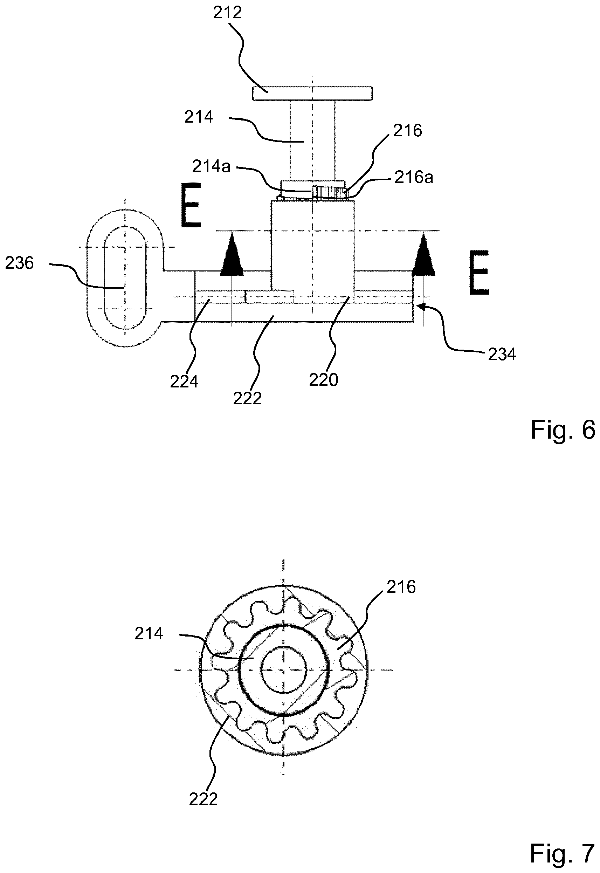

Die Figuren 6 bis 9 zeigen im Wesentlichen die Spindel-Mutter-Anordnung mit und ohne Mehrfunktionsteil 222. Aufgrund der hohen Übereinstimmung der gezeigten Teile sowie dem gemeinsamen funktionalen Zusammenhang werden die Figuren 6 bis 9 nachfolgend gemeinsam beschrieben. Die in Fig. 7 dargestellte Querschnittsdarstellung entspricht einer Schnittebene E-E aus Fig. 6.

Die Gewindespindel 214 weist ein stirnseitig angeordnetes Stirnzahnrad 212 auf, welches eine durch eine Längsverschiebung der ersten Sitzschiene 2 erzeugte Drehung eines entsprechenden Gegenzahnrades eines Getriebes, vorliegend des dritten Zahnrads 32c des Getriebes 30, der Memory-Vorrichtung 22 übernimmt und die Gewindespindel 214 in eine der Längsverschiebung der ersten Sitzschiene 2 relativ zur zweiten Sitzschiene 4 entsprechende Drehung versetzt. Ferner weist die Gewindespindel 214 einen Anschlag 214a auf, welche in der Memory-Position in Anschlag mit einer Kante 216a einer auf einem Außengewinde der Gewindespindel 214 gelagerten Mutter 216 ist. Die Mutter 216 ist über ein Innengewinde mit dem Außengewinde der Gewindespindel 214 in Eingriff. Ferner weist die Mutter 216 auf der Außenseite eine koaxial zu einer Achse der Gewindespindel 214 orientierte Außenverzahnung auf. Diese Außenverzahnung der Mutter 216 ist in einer entsprechend ebenfalls koaxial zur Achse der Gewindespindel 214 orientierten Innenverzahnung eines Abschnitts eines Zahnsegments 220 in entsprechend dieser koaxialen Richtung geführt. Die in Fig. 7 gezeigte Schnittdarstellung entlang der Achse der Gewindespindel 214 zeigt die radiale Folge der ineinander gelagerten und/oder geführten Gewindespindel 214, Mutter 216 und Abschnitt des Zahnsegments 220.

Fig. 8 zeigt insbesondere eine Darstellung der Gewindespindel 214 und der Mutter 216 in einem Zustand, in welchem die Mutter 216 in axialer Richtung der Gewindespindel 214 von einen Anschlag 214a entfernt ist. Die Mutter 216 weist an ihrer dem Anschlag 214a der Gewindespindel 214 zugewandten Stirnseite eine mit dem Anschlag 214a der Gewindespindel 214 in Anlage bringbare Kante 216a auf. Die Mutter 216 ist durch die Verbindung ihrer Außenverzahnung mit der Innenverzahnung des Abschnitts des Zahnsegments 220 in einer Rotation um die Achse der Gewindespindel 214 im Wesentlichen gehemmt und im Wesentlichen axial verschieblich in dem Zahnsegment 220 geführt. Dreht sich die Gewindespindel 214 in dem gezeigten Zustand entsprechend dem Pfeil 218a um ihre Drehachse, wird die Mutter 216 entsprechend ihrer Verbindung mit einem Gewinde der Gewindespindel 214 in Richtung des Pfeils 218b von dem Anschlag 214a weg oder bei entgegengesetzter Drehrichtung auf diesen zu bewegt.

Das Zahnsegment 220 steht mit einer Verzahnung 224 des Mehrfunktionsteils 222 in Wirkverbindung. Die Verzahnung 224 ist in Form einer Zahnstange ausgebildet. Das Mehrfunktionsteil 222 weist an den in Längsrichtung der Verzahnung 224 betrachteten Enden einen ersten Verbindungabschnitt 234 und einen dem ersten Verbindungsabschnitt 234 gegenüberliegenden zweiten Verbindungsabschnitt 236 auf.

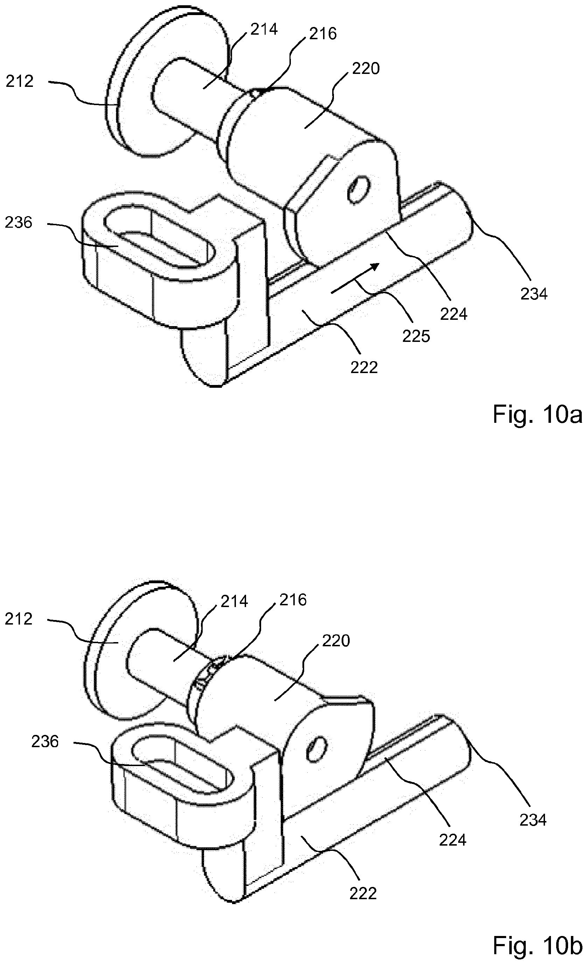

Fig. 10a und Fig. 10b zeigen je eine perspektivische Darstellung der Spindel-Mutter-Anordnung aus Fig. 9. In Fig. 10a ist die Spindel-Mutter-Anordnung in einem Zustand in der Memory-Position gezeigt, wohingegen Fig. 10b die Spindel-Mutter-Anordnung außerhalb der Memory-Position zeigt.

In Fig. 10a ist der Zustand in der Memory-Position dargestellt, in welchem der Anschlag 214a der Gewindespindel 214 in Kontakt mit der Kante 216a der Mutter 216 ist und das Mehrfunktionsteil 222 ebenso in der dargestellten Position gehalten ist. In diesem Zustand steht die Gewindespindel 214 über ihren Anschlag 214a mit der Kante 216a der Mutter 216 in Kontakt und hält diese entgegen einer auf das Mehrfunktionsteil 222 wirkende Vorspannkraft in der dargestellten Stellung. Diese Vorspannkraft kann beispielsweise durch eine nicht dargestellte, auf das Mehrfunktionsteil 222 wirkende Feder erzeugt sein und treibt das Mehrfunktionsteil 222 in die mit dem Pfeil 225 angezeigte Richtung. Eine entsprechende Rotation der Gewindespindel 214 bewirkt in diesem Zustand über den in Kontakt mit der Kante 216a der Mutter 216 befindlichen Anschlag 214a eine Drehung des Zahnsegments 220, so dass das Zahnsegment 220 das Mehrfunktionsteil 222 entgegen der Vorspannkraft in der gezeigte Stellung hält.

Fig. 10b zeigt hingegen einen Zustand außerhalb der Memory-Position, in welchem die erste Sitzschiene 2 relativ zur zweiten Sitzschiene 4 verschoben wurde und das Stirnzahnrad 212 durch das Getriebe 30 der Memory-Vorrichtung 22 entsprechend angetrieben worden ist. Eine Verschiebung des Fahrzeugsitzes 1 von der Memory-Position weg bewirkt eine durch einen Antrieb des Stirnzahnrades 212 angetriebene Rotation der Gewindespindel 214, so dass beispielsweise während der ersten 60° bis 90°-Drehung der Gewindespindel 214 die Kante 216a der Mutter 216 dem sich wegdrehenden Anschlag 214a folgt. Dies ist der auf das Mehrfunktionsteil 222 wirkenden Vorspannkraft geschuldet, welche die Mutter 216 über das Zahnsegment 220 antriebt und somit die Kante 216a dem Anschlag 214a hinterherdreht. Erst wenn das Mehrfunktionsteil 222 sowie auch das Zahnsegment 220 in die dargestellte Stellung gelangt sind, erfolgt eine Drehung der weiterhin angetriebenen Gewindespindel 214 relativ zur Mutter 216, so dass die Kante 216a der Mutter 216 den Kontakt zum Anschlag 214a verliert. Hierbei bewegt sich die Mutter 216 über ein Gewinde der Gewindespindel 214 in Richtung des Pfeils 218b von dem Anschlag 214a weg und weiter in das Zahnsegment 220 hinein.

Erfolgt anschließend eine Verschiebung des Fahrzeugsitzes 1 zurück in Richtung der Memory-Position, wird das Stirnzahnrad 212 in umgekehrter Drehrichtung angetrieben und die Mutter 216 schraubt sich wieder in Richtung des Anschlags 214a der Gewindespindel 214. Gelangt die Mutter 216 mit der Kante 216a entsprechend wieder kurz vor Erreichen der Memory-Position, entsprechend der letzten 60° bis 90°-Drehung der Gewindespindel 214, in Kontakt mit dem Anschlag 214a, wird die Mutter 216 sowie das Zahnsegment 220 von der Gewindespindel 214 in eine gleichgerichtete Rotationsbewegung gezwungen, welche das Mehrfunktionsteil 222 entgegen der Vorspannkraft in die in Fig. 10a gezeigte Stellung bewegt.

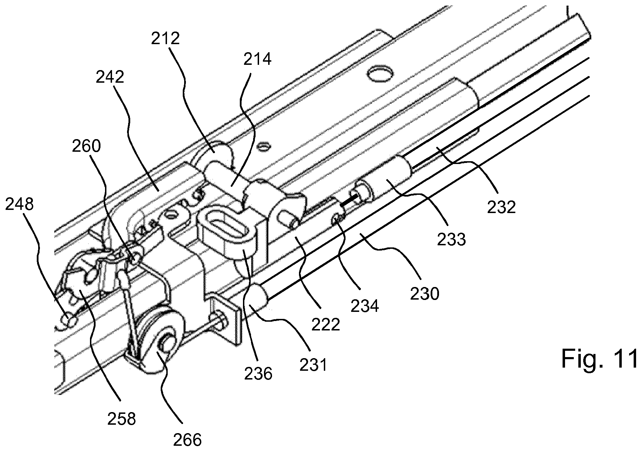

Fig. 11 zeigt eine perspektivische Darstellung einer Memory-Vorrichtung 22 zur Bereitstellung einer Easy-Entry-Komfort-Funktion, als einer von wenigstens zwei möglichen Funktionen, die mittels dem Mehrfunktionsteil 222 betätigbar sind. Zunächst ist schematisch ein erster Bowdenzug 230 gezeigt, welcher in einer ersten Aufnahme 231 gehalten ist. Der ersten Bowdenzug 230 weist eine von einer nicht näher bezeichneten Hülle umschlossene, ebenfalls nicht näher bezeichnete, Seele auf, welche über eine Umlenkrolle 266 geführt mit einem Sperrhebel 258 verbunden ist. Das andere Ende des ersten Bowdenzugs 230 ist mit der Lehne 3 wirkverbunden und dient der Entriegelung der Längsverstellung, insbesondere des Längseinstellers, indem die Verriegelung des Längseinstellers durch ein entsprechendes Vorklappen der Lehne 3 mittels des ersten Bowdenzugs 230 ausgelöst wird. Hierbei wird der Sperrhebel 258 durch den ersten Bowdenzug 230 zunächst um einen ersten Drehpunkt 260 mit seinem freien Ende an einen ersten Anschlag 248 verschwenkt. Anschließend wird der Betätigungshebel 202 von dem sich am Anschlag 248 abstützenden Sperrhebel 258 mitbewegt und wirkt in an sich bekannter Weise auf eine nicht im Detail dargestellte Verriegelung des Längseinstellers und entriegelt diese Verriegelung des Längseinstellers.

Ferner ist ein zweiter Bowdenzug 232 vorgesehen, dessen Ummantelung in einer zweiten Aufnahme 233 gehalten ist und dessen Seele mit dem ersten Verbindungsabschnitt 234 des Mehrfunktionsteils 222 verbunden ist. Wird, nach dem Vorklappen der Lehne 3 und einem hierdurch bewirkten Entriegeln des Längseinstellers, der Fahrzeugsitz 1 aus einer Gebrauchsstellung in eine Easy-Entry-Stellung verfahren, so wird das Mehrfunktionsteil 222 von dem Getriebe 30 der Memory-Vorrichtung 22 über die Spindel-Mutter-Anordnung und das Zahnsegment 220 angetrieben. Das Mehrfunktionsteil 222 betätigt hierbei mittels des mit dem ersten Verbindungsabschnitt 234 verbundenen zweiten Bowdenzugs 232 eine Verriegelung zur Arretierung der vorgeklappten Lehne 3. Folglich ist die Lehne 3 hierdurch in der Vorgeklappten Stellung arretiert und der Längseinsteller bleibt ebenfalls weiter über die Betätigung durch den ersten Bowdenzug 230 entriegelt. Der Fahrzeugsitz 1 ist in diesem Zustand in Längsrichtung nach vorne frei verschiebbar.

Nimmt der Fahrzeugsitz 1 anschließend wieder die Memory-Position ein, wird das Mehrfunktionsteil 222 kurz vor Erreichen der Memory-Position beginnend abermals von dem Getriebe 30 der Memory-Vorrichtung 22 über die Spindel-Mutter-Anordnung und das Zahnsegment 220 angetrieben, jedoch in entgegengesetzter Richtung als zuvor. Dieser Bewegung des Mehrfunktionsteils 222 folgend gibt der zweite Bowdenzug 232 die Verriegelung zur Arretierung der vorgeklappten Lehne 3 wieder frei, und die Lehne 3 kann beim Erreichen der Memory-Position wieder aufgerichtet werden, so dass der Fahrzeugsitz 1 wieder die Gebrauchsstellung einnimmt.

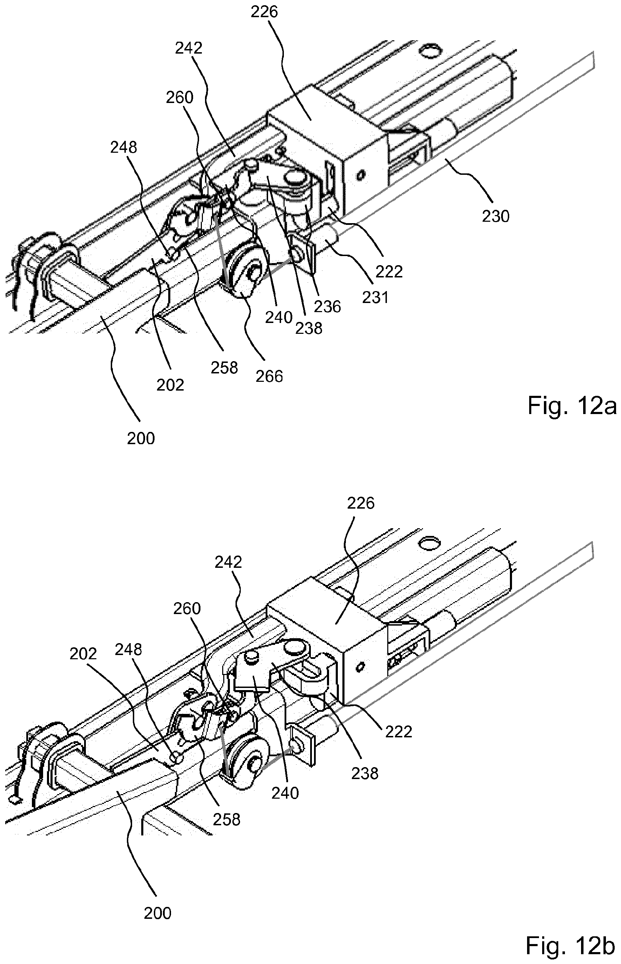

Die Figuren 12a und 12b zeigen eine perspektivische Darstellung einer zweiten Ausführungsform der erfindungsgemäßen Vorrichtung, insbesondere eine Vorrichtung zur Bereitstellung einer Easy-Entry-Offenhaltefunktion, als einer von wenigstens zwei möglichen Funktionen, die mittels dem Mehrfunktionsteil 222 betätigbar sind. Im Einzelnen zeigt Fig. 12a die Vorrichtung beim Vorklappen der Lehne 3 in der Memory-Position und Fig. 12b die Vorrichtung während der Verschiebens des Fahrzeugsitzes 1 außerhalb der Memory-Position. Diese Ausführungsform kommt erfindungsgemäß zum Einsatz, wenn der Längseinsteller mit Easy-Entry-Funktion keine Verriegelung zur Arretierung der vorgeklappten Lehne 3 aufweist, beispielsweise um im Bereich der Lehne 3 Material einzusparen und/oder eine Lehnenneigungseinstellung zur Kostenersparnis und Gewichtsersparnis entsprechend mit weniger Bauteilen und/oder leichterem Material fertigen zu können. Wenn demnach keine Verriegelung zur Arretierung der vorgeklappten Lehne 3 vorgesehen ist, kann die Lehne 3 frei schwenkbar in jeder Längsposition des verschobenen Fahrzeugsitzes 1 wieder aufgerichtet werden.

Wird der Sperrhebel 258 durch den ersten Bowdenzug 230 zunächst um den ersten Drehpunkt 260 mit seinem freien Ende an den ersten Anschlag 248 verschwenkt, wie in Fig. 12a gezeigt, und wird anschließend der Betätigungshebel 202 von dem sich am Anschlag 248 abstützenden Sperrhebel 258 mitbewegt, bis die Verriegelung des Längseinstellers entriegelt, bzw. geöffnet ist, kann der Fahrzeugsitz 1 aus der Memory-Position heraus in Richtung der Easy-Entry-Stellung verschoben werden. Bei einem Verschieben des Fahrzeugsitzes 1 wird das Mehrfunktionsteil 222 von dem Getriebe 30 der Memory-Vorrichtung 22 über die Spindel-Mutter-Anordnung und das Zahnsegment 220 angetrieben. Das Mehrfunktionsteil 222 betätigt hierbei mittels eines mit dem zweiten Verbindungsabschnitt 236 verbundenen Blockierhebels 238, insbesondere einer an dem Blockierhebel 238 angeformten Nase 240, die Easy-Entry-Offenhaltefunktion. Ist zunächst, wie zuvor beschrieben, der Betätigungshebel 202 in eine die Verriegelung des Längseinstellers öffnende Stellung verschwenkt, bewirkt ein Verschieben des Fahrzeugsitzes 1, dass der Blockierhebel 238 von der Bewegung des Mehrfunktionsteils 222 in den Bewegungsradius des Betätigungshebels 202 verschwenkt wird und den Betätigungshebel 202 in der öffnenden Stellung sichert, wie dies in Fig.12b dargestellt ist. Anschließend kann die Lehne 3 in einer vorgeschobenen Stellung des Fahrzeugsitzes 1 wieder aufgerichtet werden, ohne dass sich die Verriegelung des Längseinstellers durch das Nachgeben des ersten Bowdenzugs 230 wieder verriegelt, da der Betätigungshebel 202 in der entriegelnden Stellung gesichert ist. Der Fahrzeugsitz 1 ist in diesem Zustand in Längsrichtung bis in die Easy-Entry-Stellung und zurück in die Memory-Position frei verschiebbar.

Erst beim Erreichen der Memory-Position wird die Längsverstellung wieder automatisch verriegelt. Erreicht der Fahrzeugsitz 1 wieder die Memory-Position, wird die Nase 240 zusammen mit dem Blockierhebel 238 durch eine entsprechende Bewegung des Mehrfunktionsteils 222 wieder zurück verschwenkt und gibt den Betätigungshebel 202 frei, wodurch die Verriegelung des Längseinstellers wieder verriegelt. Ferner ist der Darstellung von Fig. 12b ein Gehäuse 226 für die Spindel-Mutter-Anordnung und das Mehrfunktionsteil 222 zu entnehmen. Das Mehrfunktionsteil 222 ist vorliegend in entsprechenden Ausnehmungen und Führungen des Gehäuses 226 gelagert.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen.

In den Schutzansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus.

### Bezugszeichenliste

- 1: Fahrzeugsitz
- 2: erste Sitzschiene
- 3: Lehne
- 4: zweite Sitzschiene
- 14: Sperrelement
- 18: Rückstellfeder
- 22: Memory-Vorrichtung
- 24: Betätigungsarm
- 26: Gehäuse
- 28: Zahnstange
- 30: Getriebe
- 31a: erste Achse
- 31b: zweite Achse
- 31c: dritte Achse
- 32a: erstes Zahnrad
- 32b: zweites Zahnrad
- 32c: drittes Zahnrad
- 32d: viertes Zahnrad
- 32e: fünftes Zahnrad
- 36: Schwinge
- 38: Zugstange
- 200: Handgriff
- 202: Betätigungshebel
- 204: Übertragungsrohr
- 210: Durchtrittsöffnung
- 212: Stirnzahnrad
- 214: Gewindespindel
- 214a: Anschlag
- 216: Mutter
- 216a: Kante
- 218a: Pfeil (Rotationsbewegung)
- 218b: Pfeil (Verschiebung der Mutter)
- 220: Zahnsegment
- 222: Mehrfunktionsteil
- 224: Verzahnung
- 225: Pfeil
- 226: Gehäuse
- 230: erster Bowdenzug
- 231: erste Aufnahme
- 232: zweiter Bowdenzug
- 233: zweite Aufnahme
- 234: erster Verbindungsabschnitt
- 236: zweiter Verbindungsabschnitt
- 238: Blockierhebel
- 240: Nase
- 242: Reset-Hebel
- 248: erster Anschlag
- 258: Sperrhebel
- 260: erster Drehpunkt
- 266: Umlenkrolle
- x: Längsrichtung
- y: Querrichtung
- z: Vertikalrichtung

## Patentansprüche

1. Vorrichtung mit einem Fahrzeugsitz (1), welcher einen Sitzteil und eine Lehne (3) aufweist, dessen Sitzteil mit einer ersten Sitzschiene (2) eines Längseinstellers der Vorrichtung verbunden ist, wobei die erste Sitzschiene (2) des Längseinstellers in einer strukturfesten zweiten Sitzschiene (4) des Längseinstellers in Längsrichtung (x) verschiebbar geführt ist, wobei der Fahrzeugsitz (1) für einen vereinfachten Zugang zu den rückwärtigen Sitzen aus der Gebrauchsstellung in eine Easy-Entry-Stellung überführbar ist, wenn eine Verriegelung des Längseinstellers des Fahrzeugsitzes (1) durch ein Vorklappen der Lehne (3) entriegelt ist, wobei die Vorrichtung eine Memory-Vorrichtung (22) aufweist, welche eine Verschiebung der ersten Sitzschiene (2) relativ zur zweiten Sitzschiene (4) erfasst,
**dadurch gekennzeichnet, dass**
die Vorrichtung ein mit der Memory-Vorrichtung (22) in Verbindung stehendes Mehrfunktionsteil (222) aufweist, welches mittels wenigstens einem zusätzlichen Bauteil (232, 238) der Vorrichtung eingerichtet ist, eine Easy-Entry-Komfort-Funktion, welche im Falle eines Längseinstellers mit Easy-Entry-Funktion und einer vorgesehenen Verriegelung zur Arretierung der vorgeklappten Lehne (3), beim Erreichen der Memory-Position selbstständig eine Entriegelung der Lehne (3) auslöst, oder eine Easy-Entry-Offenhaltefunktion, welche im Falle eines Längseinstellers mit Easy-Entry-Funktion ohne Verriegelung zur Arretierung der vorgeklappten Lehne (3), nach einem Verlassen der Memory-Position die Verriegelung der Längsverstellung permanent in einem geöffneten entriegelten Zustand hält und beim Erreichen der Memory-Position die Längsverstellung wieder automatisch verriegelt, bereitzustellen.

2. Vorrichtung nach Anspruch 1, wobei eine Memory-Vorrichtung (22) vorgesehen ist, welche mittels eines Getriebes (30) eine Verschiebung der ersten Sitzschiene (2) relativ zur zweiten Sitzschiene (4) erfasst.

3. Vorrichtung nach einem der Ansprüche 1 bis 2, wobei das Mehrfunktionsteil (222) an den in Längsrichtung betrachteten Enden einen ersten Verbindungabschnitt (234) und einen dem ersten Verbindungsabschnitt (234) gegenüberliegenden zweiten Verbindungsabschnitt (236) aufweist.

4. Vorrichtung nach Anspruch 3, wobei das zusätzliche Bauteil ein Bowdenzug (232) ist, welcher mit einer Verriegelung zur Arretierung der vorgeklappten Lehne (3) in Wirkverbindung steht.

5. Vorrichtung nach Anspruch 4, wobei der Bowdenzug (232) mit dem ersten Verbindungsabschnitt (234) des Mehrfunktionsteils (222) verbunden ist.

6. Vorrichtung nach einem der Ansprüche 3 bis 5, wobei das zusätzliche Bauteil ein Blockierhebel (238) ist, welcher eingerichtet ist, die Verriegelung des Längseinstellers im entriegelten Zustand zu sichern.

7. Vorrichtung nach Anspruch 6, wobei das Mehrfunktionsteil (222) über dem zweiten Verbindungsabschnitt (236) mit dem Blockierhebel (238) verbundenen ist.

8. Vorrichtung nach Anspruch 7, wobei der Blockierhebel (238) von der Bewegung des Mehrfunktionsteils (222) in den Bewegungsradius des Betätigungshebels (202) verschwenkbar ist.

9. Vorrichtung nach einem der Ansprüche 7 bis 8, wobei der Blockierhebel (238) eine angeformte Nase (240) aufweist.

10. Vorrichtung nach einem der Ansprüche 1 bis 9, wobei die Memory-Vorrichtung (22) mit einer Spindel-Mutter-Anordnung in Verbindung steht.

11. Vorrichtung nach Anspruch 10, wobei die Spindel-Mutter-Anordnung eine Gewindespindel (214) samt stirnseitig angeordnetem Stirnzahnrad (212), eine Mutter (216) sowie ein Zahnsegment (220) umfasst.

12. Vorrichtung nach Anspruch 11, wobei das Zahnsegment (220) der Spindel-Mutter-Anordnung mit einer Verzahnung (224) des Mehrfunktionsteils (222) in Wirkverbindung steht.

13. Vorrichtung nach Anspruch 12, wobei die Verzahnung (224) in Form einer Zahnstange ausgebildet ist.

14. Fahrzeugsitz (1) aufweisend wenigstens eine Vorrichtung gemäß einem der vorhergehenden Ansprüche.

## Claims

1. Device with a vehicle seat (1) which has a seat part and a backrest (3), the seat part of which vehicle seat is connected to a first seat rail (2) of a longitudinal adjuster of the device, wherein the first seat rail (2) of the longitudinal adjuster is guided displaceably in the longitudinal direction (x) in a structure-mounted second seat rail (4) of the longitudinal adjuster, wherein, for facilitated access to the rear seats, the vehicle seat (1) can be transferred out of the use position into an easy-entry position when a lock of the longitudinal adjuster of the vehicle seat (1) is unlocked by folding the backrest (3) forwards, wherein the device has a memory device (22) which senses a displacement of the first seat rail (2) relative to the second seat rail (4) ,
**characterized in that**
the device has a multi-functional part (222) which is connected to the memory device (22) and, using at least one additional component (232, 238) of the device, is configured to provide an easy-entry comfort function which, in the case of a longitudinal adjuster with an easy-entry function and a provided lock for locking the folded-forwards backrest (3), automatically triggers unlocking of the backrest (3) on reaching the memory position, or an easy-entry holding-open function which, in the case of a longitudinal adjuster with an easy-entry function without a lock for locking the folded-forwards backrest (3), after leaving the memory position holds the lock of the longitudinal adjustment permanently in an open unlocked state, and automatically locks the longitudinal adjustment again on reaching the memory position.

2. Device according to Claim 1, wherein a memory device (22) is provided which uses a gearing (30) to sense a displacement of the first seat rail (2) relative to the second seat rail (4).

3. Device according to either of Claims 1 and 2, wherein the multi-functional part (222) has a first connecting portion (234) and a second connecting portion (236) opposite the first connecting portion (234) at the ends, as viewed in the longitudinal direction.

4. Device according to Claim 3, wherein the additional component is a Bowden cable (232) which is operatively connected to a lock for locking the folded-forwards backrest (3).

5. Device according to Claim 4, wherein the Bowden cable (232) is connected to the first connecting portion (234) of the multi-functional part (222).

6. Device according to one of Claims 3 to 5, wherein the additional component is a blocking lever (238) which is configured to secure the lock of the longitudinal adjuster in the unlocked state.

7. Device according to Claim 6, wherein the multi-functional part (222) is connected to the blocking lever (238) via the second connecting portion (236).

8. Device according to Claim 7, wherein the blocking lever (238) can be pivoted into the movement radius of the actuating lever (202) by the movement of the multi-functional part (222).

9. Device according to either of Claims 7 and 8, wherein the blocking lever (238) has an integrally formed lug (240) .

10. Device according to one of Claims 1 to 9, wherein the memory device (22) is connected to a spindle-nut arrangement.

11. Device according to Claim 10, wherein the spindle-nut arrangement comprises a threaded spindle (214) together with a spur gear (212) arranged on the end side, a nut (216) and a toothed segment (220).

12. Device according to Claim 11, wherein the toothed segment (220) of the spindle-nut arrangement is operatively connected to a toothing (224) of the multi-functional part (222).

13. Device according to Claim 12, wherein the toothing (224) is in the form of a rack.

14. Vehicle seat (1) having at least one device according to one of the preceding claims.

## Revendications

1. Dispositif muni d'un siège de véhicule (1), qui comprend une partie siège et un dossier (3), dont la partie siège est reliée à un premier rail de siège (2) d'un système de réglage en longueur du dispositif, le premier rail de siège (2) du système de réglage en longueur étant guidé en déplacement dans la direction longitudinale (x) dans un deuxième rail de siège (4), fixé à la structure, du système de réglage en longueur, le siège de véhicule (1) pouvant passer de la position d'utilisation à une position d'entrée facile pour un accès simplifié aux sièges arrière, lorsqu'un verrouillage du système de réglage en longueur du siège de véhicule (1) est déverrouillé par un basculement vers l'avant du dossier (3), le dispositif comprenant un dispositif à mémoire (22), qui détecte un déplacement du premier rail de siège (2) par rapport au deuxième rail de siège (4),
**caractérisé en ce que**
le dispositif comprend une pièce multifonction (222) qui est en liaison avec le dispositif à mémoire (22) et qui est conçue pour fournir, au moyen d'au moins un composant supplémentaire (232, 238) du dispositif, une fonction entrée facile-confort qui, dans le cas d'un système de réglage en longueur à fonction entrée facile et d'un verrouillage prévu pour l'arrêt du dossier (3) basculé vers l'avant, déclenche automatique un déverrouillage du dossier (3) lorsque la position de mémoire est atteinte, ou une fonction entrée facile-maintien ouvert qui, dans le cas d'un système de réglage en longueur à fonction entrée facile sans verrouillage pour l'arrêt du dossier (3) basculé vers l'avant, après avoir quitté la position de mémoire, maintient le verrouillage du système de réglage en longueur en permanence dans un état déverrouillé ouvert et verrouille de nouveau automatiquement le système de réglage en longueur lorsque la position de mémoire est atteinte.

2. Dispositif selon la revendication 1, dans lequel un dispositif à mémoire (22) est prévu, qui détecte au moyen d'une transmission (30) un déplacement du premier rail de siège (2) par rapport au deuxième rail de siège (4) .

3. Dispositif selon l'une quelconque des revendications 1 à 2, dans lequel la pièce multifonction (222) comprend, aux extrémités considérées dans la direction longitudinale, une première section de liaison (234) et une deuxième section de liaison (236) opposée à la première section de liaison (234).

4. Dispositif selon la revendication 3, dans lequel le composant supplémentaire est un câble Bowden (232), qui est en liaison fonctionnelle avec un verrouillage pour l'arrêt du dossier (3) basculé vers l'avant.

5. Dispositif selon la revendication 4, dans lequel le câble Bowden (232) est relié à la première section de liaison (234) de la pièce multifonction (222).

6. Dispositif selon l'une quelconque des revendications 3 à 5, dans lequel le composant supplémentaire est un levier de blocage (238), qui est conçu pour sécuriser le verrouillage du système de réglage en longueur dans l'état déverrouillé.

7. Dispositif selon la revendication 6, dans lequel la pièce multifonction (222) est reliée au levier de blocage (238) par l'intermédiaire de la deuxième section de liaison (236).

8. Dispositif selon la revendication 7, dans lequel le levier de blocage (238) peut être amené à pivoter par le mouvement de la pièce multifonction (222) dans le rayon de mouvement du levier d'actionnement (202).

9. Dispositif selon l'une quelconque des revendications 7 à 8, dans lequel le levier de blocage (238) comprend un bec (240) formé sur celui-ci.

10. Dispositif selon l'une quelconque des revendications 1 à 9, dans lequel le dispositif à mémoire (22) est en liaison avec un agencement broche-écrou.

11. Dispositif selon la revendication 10, dans lequel l'agencement broche-écrou comprend une broche filetée (214) incluant une roue dentée frontale (212) agencée côté frontal, un écrou (216), et un segment denté (220) .

12. Dispositif selon la revendication 11, dans lequel le segment denté (220) de l'agencement broche-écrou est en liaison fonctionnelle avec une denture (224) de la pièce multifonction (222).

13. Dispositif selon la revendication 12, dans lequel la denture (224) est configurée sous la forme d'une tige dentée.

14. Siège de véhicule (1) comprenant au moins un dispositif selon l'une quelconque des revendications précédentes.
